Europäisches Patentamt

European Patent Office

Office européen des brevets

(11) Veröffentlichungsnummer: **0 384 152**
**A1**

## (12) EUROPÄISCHE PATENTANMELDUNG

(21) Anmeldenummer: 90101549.5

(22) Anmeldetag: 26.01.90

(51) Int. Cl.⁵: **B60T 17/00**

(30) Priorität: 22.02.89 DE 8902079 U

(43) Veröffentlichungstag der Anmeldung:
**29.08.90 Patentblatt 90/35**

(84) Benannte Vertragsstaaten:
**DE FR NL SE**

(71) Anmelder: **ROBERT BOSCH GMBH**
**Postfach 10 60 50**
**D-7000 Stuttgart 10(DE)**

(72) Erfinder: **Delfs, Joachim, Ing.**
**Schubartstrasse 4**
**D-7254 Hemmingen(DE)**
Erfinder: **Langbein, Egon**
**Eugen-Hermann-Strasse 9**
**D-7141 Schwieberdingen(DE)**

(54) **Lufttrockner für Druckluftbremsanlagen.**

(57) Der Lufttrockner hat ein im Trocknergehäuse (11) angeordnetes, das Rückströmen von Druckluft aus der Bremsanlage verhinderndes Rückschlagventil (12). Dieses weist einen verschiebbaren, gummielastischen Ventilkörper (22) auf, welcher in einer Gehäusebohrung (15) an einem Ventilsitz (16) ahgestützt ist. Das Ventil hat eine sowohl am Ventilkörper als auch an einer Verschlußschraube (28) der Gehäusebohrung angreifende Druckfeder (33). Zur Geräuschvermeidung aufgrund von Schwingungen des Ventilkörpers (22) ist dieser auf einem in eine Längsbohrung (27) der Verschlußschraube (28) eingreifenden Führungsbolzen (23) angeordnet.

FIG. 2

EP 0 384 152 A1

## Lufttrockner für Druckluftbremsanlagen

Stand der Technik

Die Erfindung geht aus von einem Lufttrockner für Druckluftbremsanlagen nach der Gattung des Hauptanspruchs.

Bei einem auf dem Markt befindlichen Lufttrockner dieser Art ist der Ventilkörper lediglich auf einer Druckfeder abgestützt. Beim Durchströmen der Druckluft durch das Rückschlagventil wird der Ventilkörper zu Schwingungen angeregt. Diese hörbaren Schwingungen sind besonders unangenehm, wenn die Bremsanlage nahezu gefüllt ist. Bei geringen Druckunterschieden zwischen der Zuström- und der Abströmseite des Ventils neigt der Ventilkörper nämlich zum einseitigen Abheben und Zurückklappen auf den Ventilsitz.

Aus der EP-PS 22 916 ist ein Rückschlagventil mit einem auf einer Druckfeder sitzenden Ventilkörper bekannt, der zum Vermeiden von Schwingungen an seinem Außenumfang in einer Gehäusebohrung abgestützt ist. Zu diesem Zweck hat der elastische Ventilkörper einen umlaufenden Bund, in den Längsrippen der Gehäusebohrung eingreifen ist. Bei einer anderen Ausführungsform des Ventilkörpers ist dieser mit elastischen Armen versehen, die am Innenumfang der Gehäuse bohrung angreifen. Ein derartiges Rückschlagventil baut wegen der Außenführung des Ventilkörpers im Durchmesser verhältnismäßig groß. Außerdem ist das Klappen des Ventilkörpers nicht völlig ausgeschlossen, da eine Druckfeder aufgrund der angelegten letzten Windung entlang ihrem Umfang unterschiedliche Federkräfte erzeugt.

Vorteile der Erfindung

Die erfindungsgemäße Lufttrockner mit den kennzeichnenden Merkmalen des Hauptanspruchs hat demgegenüber den Vorteil, daß der Ventilkörper beim Abheben und Anlegen an seinen Sitz lediglich eine geradlinige Längsbewegung ausführen kann. Ein einseitiges, klappenartiges Bewegen des Ventilkörpers ist daher ausgeschlossen. Durch die Führung des Ventilkörpers werden unvermeidliche Schwingungen aufgrund der Reibung des Führungsbolzens in der Längsbohrung der Verschlußschraube gedämpft. Ein erfindungsgemäß ausgebildeter Lufttrockner belastet daher die Umwelt nur in geringem Maß. Von besonderem Vorteil ist außerdem die raumsparende Ausbildung der Ventilführung, da der Bolzen zweckmäßigerweise gleichachsig zur Federlängsachse verläuft. Durch diesen Verzicht auf eine Außenführung des Ventilkörpers ist das Rückschlagventil zum Einsatz unter beengten Einbauverhältnissen geeignet.

Durch die in den Unteransprüchen angeführten Maßnahmen sind vorteilhafte Weiterbildungen und Verbesserungen des im Hauptanspruch angegebenen Lufttrockners möglich.

Die im Unteranspruch 2 angegebene Ausgestaltung hat den Vorteil, daß durch die formschlüssige Verbindung des Ventilkörpers mit dem Führungsbolzen ein sicherer Zusammenhalt beider Teile erzielt wird. Außerdem wird hierdurch bei Ventilkörpern aus einem weichelastischen Werkstoff der Ventilkörperkern ausgesteift, während sein dem Ventilsitz zugekehrter Außenbereich nachgiebig bleibt. Durch den Angriff des Ventilkörpers am Bund des Bolzens wird darüber hinaus die Funktionssicherheit des Rückschlagventils erhöht, da Bewegungen des Ventilkörpers relativ zum Führungsbolzen unterbunden sind. Ferner sind der kreiszylindrische Schaft des Führungsbolzens und die mit diesem zusammenwirkende Längsbohrung der Verschlußschraube ohne Schwierigkeiten in der erforderlichen Passung herstellbar.

Die Weiterbildung nach Anspruch 3 ist insofern vorteilhaft, als hierdurch auf einfache Weise ein Druckausgleich in der Längsbohrung der Verschlußschraube erzielt wird. Außerdem kann der Druck auf der Abströmseite des Rückschlagventils erfaßt werden, wenn die Verschlußschraube eine in ihre Längsbohrung mündende Anschlußöffnung hat.

Durch die im Unteranspruch 4 angegebene Zentrierung der Druckfeder wird die Achsgleichheit zwischen der Feder und dem Führungsbolzen sichergestellt, so daß definierte Kraftverhältnisse am Ventilkörper gegeben sind.

Zeichnung

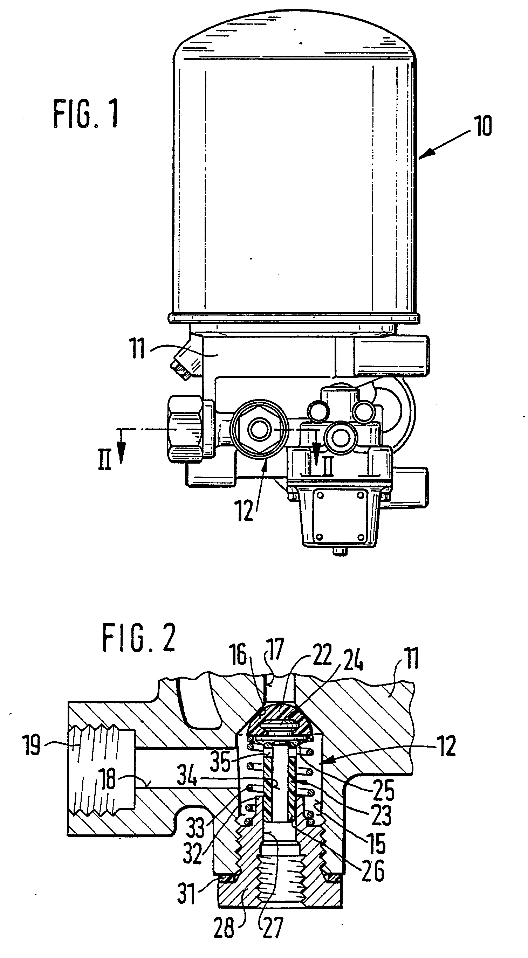

Ein Ausführungsbeispiel der Erfindung ist in der Zeichnung dargestellt und in der nachfolgenden Beschreibung näher erläutert. Es zeigen: Figur 1 eine Ansicht eines Lufttrockners für Druckluftbremsanlagen in verkleinertem Maßstab und Figur 2 einen Schnitt durch ein im Trocknergehäuse sitzendes Rückschlagventil entlang der Linie II-II in Figur 1 in natürlicher Größe in anderem Maßstab.

Beschreibung des Ausführungsbeispiels

Ein Lufttrockner 10 für eine nicht dargestellte Druckluftbremsanlage hat ein Gehäuse 11 mit einem Rückschlagventil 12 (Figur 1). Das Ventil 12 verhindert das Rückströmen von Druckluft aus der Bremsanlage.

Das Rückschlagventil 12 ist in einer Bohrung 15 des Trocknergehäuses 11 angeordnet (Figur 2). Die Gehäusebohrung 15 endet in einem kegelförmig ausgebildeten Ventilsitz 16. Im Bereich des Ventilsitzes 16 mündet ein Zuströmkanal 17 für Druckluft mit gleichachsigem Verlauf in die Gehäusebohrung 15 ein. In Strömungsrichtung der Druckluft geht nach dem Ventilsitz 16 von der Gehäusebohrung 15 ein Abströmkanal 18 im rechten Winkel aus. Dieser endet in einem Stutzen 19 zum Anschluß einer zum nicht dargestellten Druckbehälter der Bremsanlage führenden Leitung.

Das Rückschlagventil 12 hat einen unter der Wirkung der im Kanal 17 zuströmenden Druckluft verschiebbaren Ventilkörper 22. Dieser besteht aus einem gummielastischen Werkstoff und weist eine halbkugelförmige Gestalt auf. Der Ventilkörper 22 ist mit einem sich gleichachsig zur Gehäusebohrung 15 erstreckenden Führungsbolzen 23 verbunden. Dieser hat an seinem sitzseitigen Endabschnitt einen knopfförmigen Vorsprung 24. Der passend ausgebildete Ventilkörper 22 übergreift den knopfförmigen Vorsprung 24 des Führungsbolzens 23. Zwischen beiden Teilen ist daher eine formschlüssige Verbindung gegeben. Auf den knopfförmigen Vorsprung 24 folgend hat der Führungsbolzen 23 einen Bund 25, gegen den der Ventilkörper 22 mit seiner vom Ventilsitz 16 abgekehrten, ebenen Stirnseite abgestützt ist. Auf der vom Ventilsitz 16 abgewandten Seite des Bundes 25 ist der Führungsbolzen 23 mit einem kreiszylindrischen Schaft 26 fortgesetzt. Dieser gleichachsig zur Gehäusebohrung 15 verlaufende Schaft 26 des Führungsbolzens 23 greift mit seinem vom Ventilsitz 16 abgewandten Endabschnitt in eine Längsbohrung 27 einer Verschlußschraube 28 ein.

Die Verschlußschraube 28 ist unter Zwischenlage eines Dichtrings 31 gleichachsig in die Gehäusebohrung 15 eingeschraubt. Die Längsbohrung 27 der Verschlußschraube 28 ist zur gleitsitzartigen Aufnahme des kreiszylindrischen Schaftes 26 des Führungsbolzens 23 bemessen.

Ventilsitzseitig hat die Verschlußschraube 28 einen hülsenförmigen Ansatz 32 für die Zentrierung des einen Endes einer gleichachsig in der Gehäusebohrung 15 angeordneten Druckfeder 33. Das andere Ende der Druckfeder 33 ist am Bund 25 des Führungsbolzens 23 zentriert. Die Druckfeder 33 greift unter Vorspannung sowohl an der Verschlußschraube 28 als auch am Ventilkörper 22 an, der mit vorbestimmter Schließkraft am Ventilsitz 16 abgestützt ist.

Der in der Längsbohrung 27 der Verschlußschraube 28 längsgeführte Schaft 26 des Führungsbolzens 23 ist mit einer sich bis zum Bund 25 erstreckenden Längsbohrung 34 versehen. Diese hat nahe dem Bund 25 eine mit der Gehäusebohrung 15 in Verbindung stehende Querbohrung 35. Ein in der Gehäusebohrung 15 anstehender Druck kann daher in der Längsbohrung 27 der Verschlußschraube 28 z. B. für eine Signalauswertung erfaßt werden. Bei einer verschlossenen Verschlußschraube 28, d. h. die Längsbohrung 27 ist als Sackloch ausgebildet, erfolgt bei einem Hub des Ventilkörpers 22 des Rückschlagventiles 12 ein Druckausgleich durch die Längsbohrung 34 sowie die Querbohrung 35 des Führungsbolzens 23.

## Ansprüche

1. Lufttrockner (10) für Bremsanlagen mit einem im Trocknergehäuse (11) angeordneten, das Rückströmen von Druckluft aus der Bremsanlage verhindernden Rückschlagventil (12) mit einem verschiebbaren, gummielastischen Ventilkörper (22), welcher in einer Gehäusebohrung (15) an einem Ventilsitz (16) abgestützt ist, sowie mit einer sowohl am Ventilkörper (22) als auch an einer Verschlußschraube (28) der Gehäusebohrung (15) angreifenden Druckfeder (33), dadurch gekennzeichnet, daß der Ventilkörper (22) auf einem in eine Längsbohrung (27) der Verschlußschraube (28) eingreifenden Führungsbolzen (23) angeordnet ist.

2. Lufttrockner nach Anspruch 1, dadurch gekennzeichnet, daß der Ventilkörper (22) einen knopfförmigen Vorsprung (24) des Führungsbolzens (23) übergreift und mit seiner vom Ventilsitz (16) abgewandten Seite gegen einen Bund (25) des Bolzens abgestützt ist, von dem ein kreiszylindrischer Schaft (26) zur Führung in der Verschlußschraube (28) ausgeht.

3. Lufttrockner nach Anspruch 2, dadurch gekennzeichnet, daß der Schaft (26) des Führungsbolzens (23) eine Längsbohrung (27) mit einer bundseitigen Querbohrung (35) hat.

4. Lufttrockner nach Anspruch 2, dadurch gekennzeichnet, daß die Feder (33) einerseits am Bund (25) des Führungsbolzens (23) und andererseits an einem hülsenförmigen Ansatz (32) der Verschlußschraube (28) zentriert ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2220974 (CLAYTON DEWANDRE CO) <br> * Seite 2, Zeile 23 - Seite 3, Zeile 4; Figur 1 * <br> --- | 1 | B60T17/00 |
| A | US-A-4535808 (DICKEN MANUFACTURING) <br> * Spalte 3, Zeile 23 - Spalte 4, Zeile 14; Figuren 1-4 * <br> --- | 1 | |
| A | GB-A-2174923 (CLAYTON DEWANDRE CO) <br> --- | | |
| A | DE-A-3025026 (ROBERT BOSCH GMBH) <br> ----- | | |

RECHERCHIERTE
SACHGEBIETE (Int. Cl.5 )

B60T
B01D
F16K

Der vorliegende Recherchenbericht wurde für alle Patentansprüche erstellt

| Recherchenort | Abschlußdatum der Recherche | Prüfer |
|---|---|---|
| DEN HAAG | 11 MAI 1990 | HARTEVELD C.D.H. |